(19) Europäisches Patentamt / European Patent Office / Office européen des brevets

(11) **EP 4 622 333 A1**

(12) **EUROPEAN PATENT APPLICATION**
published in accordance with Art. 153(4) EPC

(43) Date of publication:
24.09.2025 Bulletin 2025/39

(21) Application number: 23893692.6

(22) Date of filing: 15.11.2023

(51) International Patent Classification (IPC):
*H04W 28/02* (2009.01)

(52) Cooperative Patent Classification (CPC):
H04W 28/02; H04W 28/08

(86) International application number:
PCT/CN2023/131719

(87) International publication number:
WO 2024/109602 (30.05.2024 Gazette 2024/22)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 21.11.2022 CN 202211453312

(71) Applicant: ZTE CORPORATION
Shenzhen, Guangdong 518057 (CN)

(72) Inventors:
• WANG, Zisheng
Shenzhen, Guangdong 518057 (CN)
• ZHANG, Yaodong
Shenzhen, Guangdong 518057 (CN)
• LIU, Xinying
Shenzhen, Guangdong 518057 (CN)

(74) Representative: **Ziebig Hengelhaupt Intellectual Property Attorneys Patentanwaltskanzlei PartGmbB Leipziger Straße 49 10117 Berlin (DE)**

(54) **LINK DETERMINATION METHOD, APPARATUS, ELECTRONIC DEVICE, AND STORAGE MEDIUM**

(57) The present application belongs to the technical field of communications. Disclosed are a link determination method, an apparatus, an electronic device, and a storage medium. The method comprises: determining at least one association parameter related to a link collision probability; determining in at least one statistical period an association parameter corresponding to each link; according to the association parameters, determining the probability of link collision of the plurality of links in the statistical period; and, according to the probability of link collision, determining from among the plurality of links a target link for transmitting a message.

Determine at least one association parameter related to a link collision probability — 102

Determine an association parameter corresponding to each link in at least one statistical period — 104

Determine a probability of link collision of the plurality of links in the statistical period according to the association parameters — 106

Determine a target link for transmitting a message from among the plurality of links according to the probability of link collision — 108

FIG. 1

EP 4 622 333 A1

## Description

### CROSS-REFERENCE TO RELATED APPLICATIONS

The present application claims priority to Chinese Patent Application No. 202211453312.9, filed to China Patent Office on November 21, 2022, and entitled "LINK DETERMINATION METHOD AND APPARATUS, ELECTRONIC DEVICE AND STORAGE MEDIUM", which is incorporated herein by reference in its entirety.

### TECHNICAL FIELD

The present application belongs to the technical field of communications, and specifically relates to a link determination method and apparatus, an electronic device and a storage medium.

### BACKGROUND

Multi-link operation (MLO) is a link selection method used in a wireless local area network (WLAN). In order to further increase link throughput and reduce latency, a WLAN device can support simultaneous sending of messages in all available frequency bands (2.4G, 5G and 6G), known as the multi-link operation. For example, when the 5G frequency band is blocked, the WLAN device may actively switch to the 2.4G or 6G frequency band for transmitting the message. Furthermore, the WLAN device may also actively transmit the same message across all the frequency bands to ensure that the message can be transmitted to a target device.

However, whether switching links after a link blockage or directly occupying more links for transmitting the message, there may be a problem of occupying a large quantity of resources.

### SUMMARY

Embodiments of the present application provide a link determination method and apparatus, an electronic device and a storage medium.

In a first aspect, an embodiment of the present application provides a link determination method, including: determining at least one association parameter related to a link collision probability; determining an association parameter corresponding to each link in at least one statistical period; determining a probability of link collision of the plurality of links in the statistical period according to the association parameters; and determining a target link for transmitting a message from among the plurality of links according to the probability of link collision.

In a second aspect, an embodiment of the present application provides a link determination apparatus, including: a first determining module, configured to determine at least one association parameter related to a link collision probability; a second determining module, configured to determine an association parameter corresponding to each link in at least one statistical period; a third determining module, configured to determine a probability of link collision of the plurality of links in the statistical period according to the association parameters; and a fourth determining module, configured to determine a target link for transmitting a message from among the plurality of links according to the probability of link collision.

In a third aspect, an embodiment of the present application provides an electronic device. The electronic device includes a processor, a memory, and a program or instruction stored on the memory and able to run on the processor, and the program or the instruction, when executed by the processor, implements the steps of the method as described in the first aspect.

In a fourth aspect, an embodiment of the present application provides a readable storage medium. The readable storage medium stores a program or an instruction, and the program or the instruction, when executed by a processor, implements the steps of the method as described in the first aspect.

### BRIEF DESCRIPTION OF DRAWING(S)

FIG. 1 is a schematic flowchart of a link determination method provided by an embodiment of the present application.

FIG. 2 is a schematic diagram of a collision probability prediction feedback working module provided by an embodiment of the present application.

FIG. 3 is a schematic structural diagram of a link determination system provided by an embodiment of the present application.

FIG. 4 is a schematic structural diagram of a link determination apparatus provided by an embodiment of the present application.

FIG. 5 is a schematic structural diagram of an electronic device provided by an embodiment of the present application.

### DETAILED DESCRIPTION

The technical solutions in the embodiments of the present application will be clearly and completely described in the following with reference to the accompanying drawings in the embodiments of the present application. Apparently, the described embodiments are some rather than all of the embodiments of the present application. All other embodiments obtained by those ordinarily skilled in the art based on the embodiments in the present application without making creative efforts shall fall within the scope of protection of the present application.

Terms "first," "second" and the like in the specification and claims of the present application are used for distinguishing similar objects, but are not used for describing a specific sequence or precedence order. It should be understood that data used in this way are exchangeable in a proper case, so that the embodiments of the present application may be implemented in an order different from the order shown or described herein. Moreover, the objects distinguished by "first" and "second" are usually of the same class and do not limit the number of objects. For example, a first object may be one or more. In addition, "and/or" in the specification and the claims represents at least one of the connected objects. A character "/" generally represents that the association objects before and after the character are in an "or" relationship.

A link determination method and apparatus, an electronic device and a storage medium provided by embodiments of the present application are illustrated below in detail through specific embodiments and application scenarios thereof with reference to the accompanying drawings.

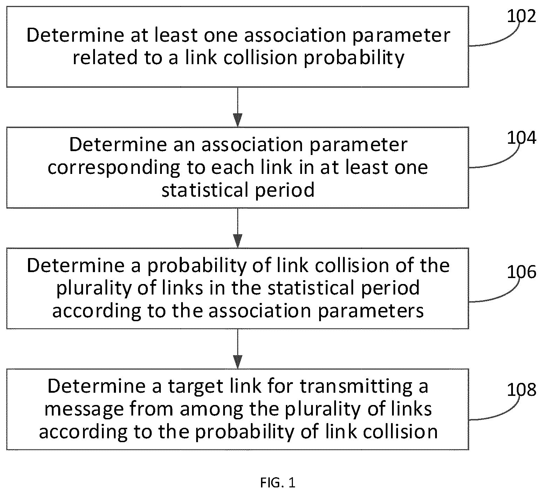

FIG. 1 shows a link determination method provided by an embodiment of the present disclosure. The method may be performed by an electronic device. The electronic device may include a server and/or a terminal device, wherein the terminal device may be, for example, a wireless local area network (WLAN) device that supports multi-link operation (MLO), and the like. In other words, the method may be implemented by software or hardware installed on the electronic device. The method includes the following steps:

step 102: at least one association parameter related to a link collision probability is determined.

Specifically, the WLAN device in an application environment of the embodiment of the present application may be an access point (AP), and an AP device provides access services to the World Wide Web or access services to a local area network for a station (STA) device through wireless links. Both the AP device and the STA device need to support a 802.11BE wireless local area network protocol. A form of the STA device may include a mobile phone, an Internet of Things terminal, or another AP device.

In a process of transmitting a message, a link is usually selected for transmitting the message according to the probability of link collision of the link. Since the link collision probability depends on various association parameters of a current wireless network, such as the number of devices that transmit the message on the link, a time for processing the message on the link, the number of base station devices on the link, and a message exchange time on the link, the at least one association parameter related to the link collision probability may be determined before determining the link collision probability of the link. The collision probability of the link may be obtained through the at least one association parameter above. Since the at least one association parameter may be determined according to actual needs, there is no specific limitation on the at least one association parameter above here.

Step 104: an association parameter corresponding to each link in at least one statistical period is determined.

Specifically, in a process of transmitting the message over a historical link, association parameter information about each link from a media access control (MAC) and port physical (PHY) layer may be continuously collected, and the association parameter of each link received in the statistical period is counted every preset statistical period. As an example, a time length of one statistical period is set to be T, then the K-th counting of the association parameter of one link is to count association parameter of the link within a [(K-1)T,KT] time starting from the determination of the association parameter, and the time length and the number of the statistical periods may be set according to actual needs. It should be understood that in the case of the plurality of statistical periods, the plurality of statistical periods may be adjacent or not, and there is no specific limitation on the time length and the number of the statistical periods here.

Step 106: a probability of link collision of the plurality of links in the statistical period is determined according to the association parameters.

Specifically, before transmitting the messages, a probability of link collision of the plurality of links in a current statistical period where a time point for transmitting the message is located needs to be determined. After determining the association parameter of each link in the at least one statistical period, the probability of link collision of the plurality of links in the current statistical period may be determined according to the association parameter of each link. The plurality of links may be determined according to actual message transmission needs. Generally, the plurality of links may be all links used for transmitting the message, and there is no specific limitation on the plurality of links here.

As an example, the statistical period where the time point for transmitting the message is located is a K-th statistical period, the probability of link collision of each link in the current K-th statistical period may be determined according to the association parameter corresponding to each line in the plurality of statistical periods among the [0, K-1] statistical periods, or determined according to the association parameter corresponding to each link in a (K-1)-th statistical period, and there is no specific limitation on the statistical period used to determine the probability of link collision of the links.

Step 108: a target link for transmitting the message is determined from among the plurality of links according to the probability of link collision.

Specifically, in a case of determining the collision probability of the plurality of links in the current statistical period, the target link for transmitting the message may be determined according to the probability of link collision of the plurality of links, and the target link may be a link with the lowest probability of link collision among the plurality of links. It should be understood that in the presence of other factors affecting message transmission, when determining the target link for transmitting the message according to the probability of link collision of the plurality of links, the target link with the highest transmission efficiency may be determined accordingly by combining with other affecting factors. For example, since a rate of transmitting the message between the links may be different, when determining the target link for transmitting the message according to the probability of link collision of the plurality of links, the target link may also be determined in combination with the rate of transmitting the message on the link. Therefore, in the embodiment of the present application, in a case of determining the probability of link collision of the plurality of links, how to determine the target link for transmitting the message may be pre-set according to the factors affecting the message transmission, which is not specifically limited here.

In the embodiment of the present application, the at least one association parameter related to the link collision probability is determined; the association parameter corresponding to each link in the at least one statistical period is determined; the probability of link collision of the plurality of links in the statistical period is determined according to the association parameters; and the target link for transmitting the message is determined from among the plurality of links according to the probability of link collision. The probability of link collision of each link in the current statistical period can be determined according to the corresponding association parameter of each link in the at least one statistical period, and then the link with the highest message transmission efficiency can be determined for message transmission according to the probability of link collision of each link, which increases the throughput of the links, reduces the latency in the network, does not require an increase in air interface occupation, solves a problem of occupying a large amount of resources in the process of transmitting the message, and improves the message transmission efficiency.

In an implementation, the association parameters are related to at least one of the following: a link collision probability of the links in the statistical period; a device that transmits the message through the links; a time for processing the message on the links; or a length of the message processed on the links.

Specifically, the association parameters of the links may be the link collision probability of the links in the statistical period, the probability of link collision of an $i$-th link in the $k$-th statistical period may be represented by $P_{i,k}$, and a set of the probability of link collision of $m$ links in the $k$-th statistical period may be represented by $P_k = [P_{1,k} ... P_{i,k} ... P_{m,k}]^T$.

The association parameter related to the device that transmits the message through the links may include the number of station (STA) devices on the links in the statistical period, the number of station devices corresponding to the $i$-th link in the $k$-th statistical period may be represented by $N_{i,k}$, and a set of the number of the station devices on each link in the $k$-th statistical period may be represented by $N_k = [N_{1,k} ... N_{i,k} ... N_{L,k}]^T$.

The association parameter related to the device that transmits the message through the links may further include the number of base station subsystems (BSS) on the links in the statistical period, and the number of base station subsystems corresponding to the $i$-th link in the $k$-th statistical period may be represented by $B_{i,k}$. In a case of having only its own wireless network, it indicates that the number of base station subsystems on the links is 1.

The association parameter related to the time for processing the message on the links may include an average message exchange time of each device on the link, and the average message exchange time of a $j$-th device on the $i$-th link in the $k$-th statistical period may be represented by $X_{i,j,k}$.

The association parameter related to the time for processing the message on the links may further include a minimum message exchange time of each device on the link, and the minimum message exchange time of the $j$-th device on the $i$-th link in the $k$-th statistical period may be represented by $X_{min,i,j,k}$.

The association parameter related to the time for processing the message on the links may further include a maximum message exchange time of each device on the link, and the maximum message exchange time of the $j$-th device on the $i$-th link in the $k$-th statistical period may be represented by $X_{max,i,j,k}$.

The association parameter related to the length of the message processed on the links may include a total length of the message sent by each device on the links, and the total length of the message sent by the $j$-th device on the $i$-th link in the $k$-th statistical period may be represented by $C_{i,j,k}$.

It should be understood that there are multiple factors that can affect link collision of the links, thus other factors that can affect link collision of the links or have an impact on determining the probability of link collision of the links can be used as association parameter, and there is no specific limitations on the association parameter of the links.

In this way, the probability of link collision of each link in the subsequent statistical period for transmitting the message may be determined according to the above association parameter corresponding to each link in the at least one statistical period, and then the target link for transmitting the message may be determined according to the probability of link collision of each link, which increases the throughput of the links, reduces the latency in the network, does not require an increase in air interface occupation, solves the problem of occupying a large quantity of resources in the process of transmitting the message, and improves the message transmission efficiency.

In an implementation, the association parameters include the link collision probability of the links in the statistical period, and determining the at least one association parameter related to the link collision probability includes:

performing a net channel evaluation on each link at a predetermined time interval in the statistical period; and determining the link collision probability of each link in the statistical period according to results of the net channel evaluation.

Specifically, the net channel evaluation may be performed on each link at the predetermined time interval in the statistical period through clear channel assessment (CCA), and the collision probability of the links in the statistical period may be obtained through the results of the net channel evaluation.

In this way, by performing the net channel evaluation on each link at the predetermined time interval and determining the link collision probability of each link in the statistical period according to the results of the net channel evaluation, the probability of link collision of each current link can be determined according to the collision probability of each link in the statistical period.

In an implementation, determining the probability of link collision of the plurality of links in the statistical period according to the association parameters includes:

performing weighted summation on the link collision probability of each link in the statistical period; and determining the probability of link collision of the plurality of links in the statistical period according to a result obtained after the weighted summation.

After determining the association parameter corresponding to each link in the at least one statistical period, the probability of link collision of each link in the current statistical period may be determined according to the association parameters above.

In certain circumstances, the probability of link collision of the current link is comprehensively affected by the probability of link collision of the links in the past period of time. For example, the tasks of the station devices may have periodicity. Therefore, the probability of link collision of the plurality of current links may be determined by performing weighted average on the probability of link collision of each link determined in the past period of time, which can be specifically calculated using the following formula:

$$\hat{P}_{i,k+1} = \sum_{w=k-M}^{k} \alpha_{w-k} P_{i,w}$$

In the above formula, $\hat{P}_{i,k+1}$ represents the probability of link collision of the i-th link within the $(k + 1)$-th statistical period, $M$ represents the weighted number (the number of statistical periods), and $\alpha_w$ represents a weighted coefficient, and satisfies $\sum_{w=1}^{M} \alpha_w = 1$, where a value of the weighted coefficient $\alpha_w$ needs to be determined based on actual measurements. Preferably, $\alpha_1 < \alpha_2 < ... < \alpha_M$, when $\alpha_M = 1$, the probability of link collision of the i-th link in the k-th statistical period is the probability of link collision of the i-th link in the $(k + 1)$-th statistical period, that is, $\hat{P}_{i,k+1} = P_{i,k}$, where $P_{i,k}$ represents the probability of link collision of the i-th link in the k-th statistical period. The probability of link collision of each link may be calculated using the above formula.

In this way, by performing weighted summation on the link collision probability of each link in the statistical period, and determining the probability of link collision of the plurality of links in the statistical period according to the result obtained after the weighted summation, the probability of link collision of each link in the current statistical period can be determined, and then the link with the highest message transmission efficiency can be determined for message transmission according to the probability of link collision of each link, which increases the throughput of the links, reduces the latency in the network, does not require an increase in air interface occupation, solves the problem of occupying a large quantity of resources in the process of transmitting the message, and improves the message transmission efficiency.

In an implementation, determining the target link for transmitting the message in a target statistical period from among the plurality of links according to the probability of link collision includes:

determining the target link from among the plurality of links according to the probability of link collision of the links and a transmission rate.

Specifically, after determining the probability of link collision of each current link, the link with the lowest probability of link collision may be directly selected as the target link, and then the message is transmitted through the target link. If the link collision occurs to this link, the link with the second lowest collision probability is used to send a target message.

Due to the possibly different rates for transmitting the message between the links, the efficiency for transmitting the message on the links is affected by the transmission rate for transmitting the message on the links. Therefore, after determining the probability of link collision of each current link, the target link for transmitting the message may further be determined from among the plurality of links in combination with the rate for transmitting the message on each link. The transmission efficiency for transmitting the message on each link can be calculated using the following formula:

$$\tilde{\beta}_i = \beta_i \left(1 - \hat{P}_{i,k}\right)$$

where $\tilde{\beta}_i$ represents the transmission efficiency on the i-th link, $\beta_i$ represents the transmission rate on the i-th link, and $\hat{P}_{i,k}$ represents the probability of link collision of the links in the k-th statistical period (current statistical period).

In this way, the target link with the highest transmission efficiency may be determined from among the plurality of links according to the probability of link collision of the links and the transmission rate, which thus increases the throughput of the links, reduces the latency in the network, does not require an increase in air interface occupation, solves the problem of occupying a large quantity of resources in the process of transmitting the message, and improves the message transmission efficiency.

In an implementation, determining the probability of link collision of the plurality of links in the statistical period according to the association parameters includes: obtaining a predicted probability of link collision of the plurality of links in the statistical period by inputting the association parameters into a prediction model, wherein the prediction model includes a corresponding relationship between a plurality of association parameters and a plurality of predicted probabilities.

Specifically, when determining the probability of link collision of the links, all the association parameters corresponding to the links in the statistical period and a preset model parameter may be input into the prediction model. Since the prediction model includes a corresponding relationship between the plurality of association parameters and a plurality of predicted results, after inputting all the association parameters corresponding to the links in the statistical period and the model parameter into the prediction model, the prediction model outputs the predicted probability of link collision of the links through a reinforcement learning algorithm according to all the association parameters of the links in the statistical period and the model parameter. As an example, $S_{i,k}$ represents a set of all the association parameters of the $i$-th link in the $k$-th statistical period, also known as a state, $\theta_k$ is a model parameter given in advance, and the prediction model $f(S_{i,k}|\theta_k)$ is a model of the reinforcement learning algorithm and also a type of parameterized functions, generally a neural network or other parameterized functions. $\theta_k$ and $S_{i,k}$ are input into the prediction model $f(S_{i,k}|\theta_k)$, thus the model $f(S_{i,k}|\theta_k)$ can output the predicted probability $\hat{P}_{i,k+1}$ of link collision of the $i$-th link in the $(k + 1)$-th statistical period, and the predicted probability $\hat{P}_{i,k+1}$ may also be called an action.

In this way, the predicted probability of link collision of the plurality of links in the statistical period is obtained by inputting the association parameters into the prediction model, wherein the prediction model includes the corresponding relationship between the plurality of association parameters and a plurality of predicted results. The above manner for determining the probability of link collision of the links can adapt to various different environments, can adapt to complex network environments, and improve accuracy of calculating the link collision probability. Moreover, the link with the highest message transmission efficiency can be determined for message transmission according to the probability of link collision of each link, which increases the throughput of the links, reduces the latency in the network, does not require an increase in air interface occupation, solves the problem of occupying a large quantity of resources in the process of transmitting the message, and improves the message transmission efficiency.

In an implementation, after determining the target link for transmitting the message from among the plurality of links according to the probability of link collision, the method further includes:
testing the target link; and adjusting parameters of the prediction model according to test results, such that the predicted probability output by the adjusted prediction model matches with the test results.

After obtaining the probability of link collision of each link through the prediction model, the target link for transmitting the message may be determined. In the process of transmitting the message, the reinforcement learning algorithm may be used to verify the predicted probability of link collision of the links output by the prediction model for the target link, so as to determine whether the predicted collision probability obtained through the prediction model is accurate. The reinforcement learning algorithm modifies the model parameter $\theta_k$ according to a verification result to make the predicted results of the prediction model closer to a real measurement result. Firstly, a reward function may be calculated using the following formula:

$$R_{k+1} = \sum_{i=1}^{L} \left\| \hat{P}_{i,k+1} - P_{i,k} \right\|^2$$

$$= \sum_{i=1}^{L} \left\| f(S_{i,k}|\theta_k) - P_{i,k} \right\|^2$$

where $R_{k+1}$ represents the reward function, $L$ represents the total number of links, $\hat{P}_{i,k+1}$ represents the probability of link collision of the $i$-th link in the $(k + 1)$-th statistical period, $P_{i,k}$ represents the probability of link collision of the $i$-th link in the $k + 1$ statistical periods, $S_{i,k}$ represents the set of association parameters of the $i$-th link in the $k$ statistical periods, $\theta_k$ represents the model parameters, and $f(S_{i,k}|\theta_k)$ represents the predicted result obtained after inputting $S_{i,k}$ and $\theta_k$ into the prediction model.

The corresponding reward function may be calculated in each statistical period through the reinforcement learning algorithm, and then an updated model parameter $\theta_k$ can be obtained by taking the derivative of the above formula and using gradient descent and other methods. This can make the predicted results of the prediction model match with the test results. Common reinforcement learning manners include a deep Q network (DQN), etc. Here, there is no limitation on the reinforcement learning manner.

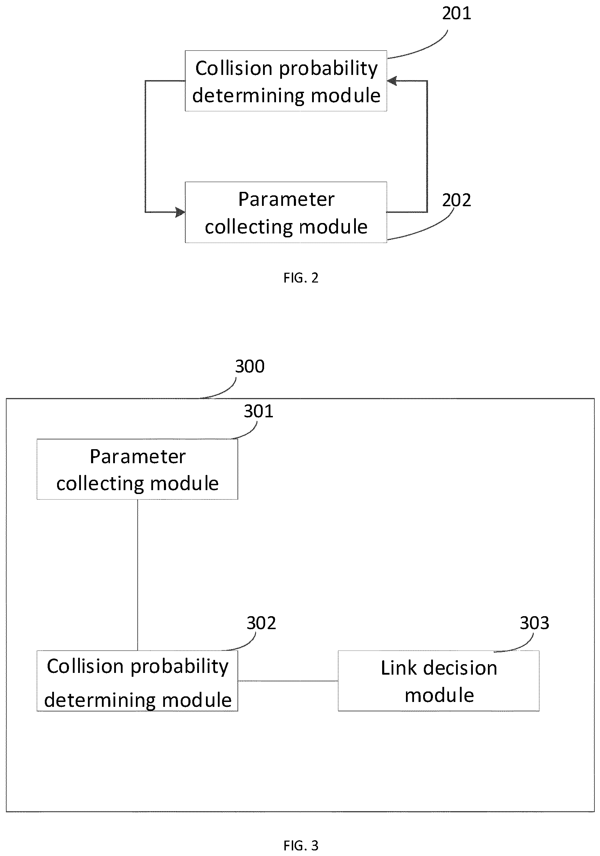

FIG. 2 shows a schematic diagram of a collision probability prediction feedback working module, which includes a collision probability determining module 201 and a parameter collecting module 202 as shown in FIG.

2. The parameter collecting module 202 is responsible for collecting an association parameter of each link in a statistical period. The collision probability determining module 201 calculates predicted results of link collision of the links according to the association parameters of the links in the statistical period, and may feed the predicted results back to the parameter collecting module 202. The collision probability determining module 201 may predict the collision probability in each statistical period and calculate the corresponding reward function in each statistical period to obtain an updated model parameter $\theta_k$.

Specifically, by testing a target link and adjusting a parameter of a prediction model according to a test result, such that a predicted probability output by the adjusted prediction model matches with the test result, dynamic adjusting can be performed according to the predicted probability of link collision of the links with an actual probability of link collision of the links, thereby improving the accuracy of predicting link collision of the links, dynamically adapting to complex network environments, and avoiding a problem of an excessive deviation between the predicted results and an actual test result.

In an implementation, the method further includes: determining a backup link for transmitting a message from among the plurality of links according to the probability of link collision.

Specifically, the backup link for transmitting the message may be determined from among the plurality of links according to the obtained probability of link collision of each link. The backup link may be a link with the lowest probability of link collision other than the target link or a link with the highest transmission efficiency other than the target link. The backup link may be determined according to actual needs, which is not specifically limited here.

By determining the backup link for transmitting the message from among the plurality of links according to the probability of link collision, the message can be transmitted timely through the backup link in a case of link collision of the target link.

In an implementation, the method further includes:

determining an idle link by performing net channel detection on the target link and the backup link; and transmitting the message through the idle link.

Specifically, after determining the target link and the backup link for transmitting the message, net channel detection may be performed on the target link and the backup link to determine one idle link from the target link and the backup link, and the message is transmitted through the idle link. In this way, one idle link may be further determined from the target link and the backup link for message transmission, thereby improving the efficiency of transmitting the message.

In an implementation, the method further includes:

occupying the target link through a probe; and transmitting the message through the target link.

Specifically, after determining the target link, a detection frame may be sent to a target tunnel and the target link may be reserved for occupancy, and when sending the message, the message is sent through the occupied target link. In this way, normal transmission of the message can be ensured to the greatest extent.

FIG. 3 shows a link determination system 300 provided by an embodiment of the present application. As shown in FIG. 3, the link determination system 300 includes a parameter collecting module 301, a collision probability determining module 302, and a link decision module 303.

The parameter collecting module 301 may continuously collect association parameter information about each link from a media access control (MAC) and port physical (PHY) layer, and counts the received association parameter of each link in a current statistical period every preset statistical period. The above association parameters are related to at least one of the following: a link collision probability of the links in the statistical period; a device that transmits the message through the links; a time for processing the message on the links; or a length of the message processed on the links.

The collision probability determining module 302 may determine the probability of link collision for each link according to the association parameters collected by the parameter collecting module 301. Specifically, weighted summation may be performed on the link collision probability of each link in the at least one statistical period, and the probability of link collision of the plurality of current links is determined according to a result obtained after the weighted summation. A predicted probability of link collision of the plurality of links in the statistical period may further be obtained by inputting the association parameters into a prediction model, wherein the prediction model includes a corresponding relationship between a plurality of association parameters and a plurality of predicted probabilities.

The link decision module 303 may determine the target link for transmitting the message according to the result output by the collision probability determining module 302, and the target link may be a link with the lowest probability of link collision among the plurality of links. It should be understood that in the presence of other factors affecting message transmission, when determining the target link with the highest efficiency for transmitting the message according to the probability of link collision of the plurality of links, the target link may be determined accordingly by combining with other affecting factors. For example, since a rate of transmitting the message between the links may be different, when determining the target link for transmitting the message according to the probability of link collision of the plurality of links, the target link may also be determined in combination with the rate of transmitting the message on the link. After the target link is confirmed, an access point (AP) device or an STA device transmits the message on the target link.

It should be noted that an execution subject of the link determination method provided by the embodiment of the present application may be a link determination apparatus, or a control module for executing the link determination method in the link determination apparatus. The embodiment of the present application illustrates the link determination apparatus provided by the embodiment of the present application by taking an example that the link determination apparatus executes the link determination method.

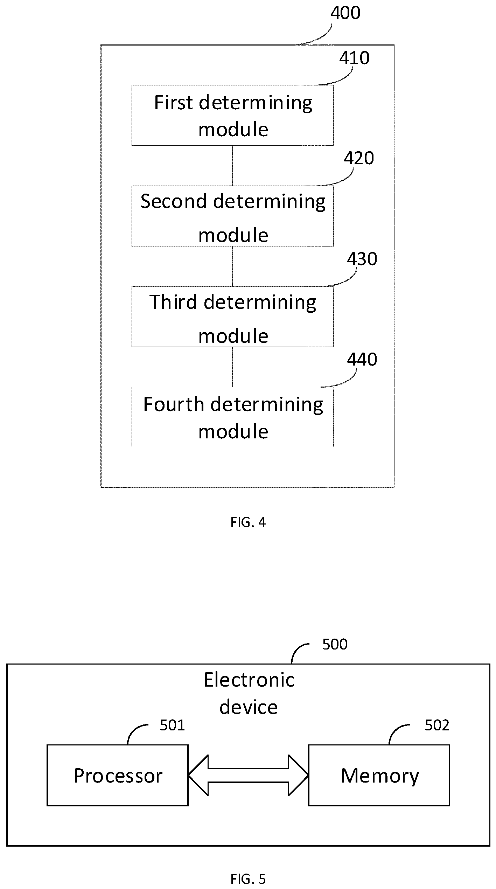

FIG. 4 is a schematic structural diagram of a link determination apparatus according to an embodiment of the present disclosure. As shown in FIG. 4, the link determination apparatus 400 includes a first determining module 410, a second determining module 420, a third determining module 430, and a fourth determining module 440.

The first determining module 410 is configured to determine at least one association parameter related to a link collision probability; the second determining module 420 is configured to determine an association parameter corresponding to each link in at least one statistical period; the third determining module 430 is configured to determine a probability of link collision of the plurality of links in the statistical period according to the association parameters; and the fourth determining module 440 is configured to determine a target link for transmitting a message from among the plurality of links according to the probability of link collision.

In an implementation, the association parameters are related to at least one of the following: a link collision probability of the links in the statistical period; a device that transmits the message through the links; a time for processing the message on the links; or a length of the message processed on the links.

In an implementation, the first determining module 410 is configured to perform a net channel evaluation on each link at a predetermined time interval in the statistical period; and determine the link collision probability of each link in the statistical period according to results of the net channel evaluation.

In an implementation, the third determining module 430 is configured to perform weighted summation on the link collision probability of each link in the statistical period; and determine the probability of link collision of the plurality of links in the statistical period according to a result obtained after the weighted summation.

In an implementation, the fourth determining module 440 is configured to determine the target link from among the plurality of links according to the probability of link collision of the links and a transmission rate.

In an implementation, the third determining module 430 is configured to obtain a predicted probability of link collision of the plurality of links in the statistical period by inputting the association parameters into a prediction model, wherein the prediction model includes a corresponding relationship between a plurality of association parameters and a plurality of predicted probabilities.

In an implementation, the fourth determining module 440 is further configured to test the target link; and adjust parameters of the prediction model according to test results, such that the predicted probability output by the adjusted prediction model matches with the test results.

In an implementation, the third determining module 430 is further configured to determine an idle link by performing net channel detection on the target link and a backup link; and transmit the message through the idle link.

In an implementation, the third determining module 430 is further configured to occupy the target link through a probe; and transmit the message through the target link.

The link determination apparatus in the embodiment of the present application may be an apparatus, or a component, an integrated circuit, or a chip in a terminal. The apparatus may be a mobile electronic device or may be a non-mobile electronic device. Exemplarily, the mobile electronic device may be a mobile phone, a tablet computer, a laptop, a palm computer, an on-board electronic device, a wearable device, an ultra-mobile personal computer (UMPC), a netbook, a personal digital assistant (PDA), etc. The non-mobile electronic device may be a server, a network attached storage (NAS), a personal computer (PC), a television (TV), a teller machine, or a self-service machine, which is not specifically limited in the embodiment of the present application.

The link determination apparatus in the embodiment of the present application may be an apparatus with an operating system. The operating system may be an Android operating system, or an ios operating system, or other possible operating systems, which is not specifically limited in the embodiment of the present application.

The link determination apparatus provided by the embodiment of the present application can implement various processes implemented in the method embodiments of FIG. 1, which is not repeated here to avoid repetitions.

Optionally, as shown in FIG. 5, an embodiment of the present application further provides an electronic device 500, including a processor 501 and a memory 502. The memory 502 stores a program or instruction that can run on the processor 501. The program or instruction, when executed by the processor 501, implements: determining at least one association parameter related to a link collision probability; determining an association parameter corresponding to each link in at least one statistical period; determining a probability of link collision of the plurality of links in the statistical period according to the association parameters; and determining a target link for transmitting a message from among the plurality of links according to the probability of link collision.

In an implementation, the association parameters are related to at least one of the following: a link collision probability of the links in the statistical period; a device that transmits the message through the links; a time for processing the message on the links; or a length of the message processed on the links.

In an implementation, a net channel evaluation is performed on each link at a predetermined time interval in the statistical period; and the link collision probability of each link in the statistical period is determined according to results of the net channel evaluation.

In an implementation, weighted summation is performed on the link collision probability of each link in the statistical period; and the probability of link collision of the plurality of links in the statistical period is determined according to a result obtained after the weighted summation.

In an implementation, the target link is determined from among the plurality of links according to the probability of link collision of the links and a transmission rate.

In an implementation, after determining the target link for transmitting the message from among the plurality of links according to the probability of link collision, the target link is tested; and parameters of the prediction model are adjusted according to test results, such that the predicted probability output by the adjusted prediction model matches with the test results.

In an implementation, a backup link for transmitting a message is determined from among the plurality of links according to the probability of link collision.

In an implementation, an idle link is determined by performing net channel detection on the target link and the backup link; and the message is transmitted through the idle link.

In an implementation, the target link is occupied through a probe; and the message is transmitted through the target link.

The specific execution steps may refer to various steps of embodiments of the link determination method above, and can achieve the same technical effect, which is not repeated here to avoid repetition.

It should be noted that the electronic device in the embodiment of the present application include: a server, a terminal, or other devices other than the terminal.

The above electronic device structure does not constitute a limitation on the electronic device. The electronic device may include more or fewer components than those shown in the figure, or combine certain components, or have different component arrangements. For example, an input unit may include a graphics processing unit (GPU) and a microphone, and a display unit may be configured with a display panel in a form of a liquid crystal display, an organic light-emitting diode, and the like. The user input unit includes at least one of a touch panel or other input devices. The touch panel is also known as a touch screen. Other input devices may include, but are not limited to, a physical keyboard, a functional key (such as a volume control key or a switch key), a track ball, a mouse, and a joystick, which are not repeated here.

The memory may be configured to store a software program and various data. The memory may mainly include a first storage area for storing a program or an instruction and a second storage area for storing data. The first storage area may store an operating system, an application program or instruction required by at least one function (such as a sound play function and an image play function), and the like. In addition, the memory may include a volatile memory or a non-volatile memory, or the memory may include both the volatile memory and the non-volatile memory. The non-volatile memory may be a read-only memory (ROM), a programmable ROM (PROM), an erasable PROM (EPROM), an electrically EPROM (EEPROM) or a flash memory. The volatile memory may be a random access memory (RAM), a static RAM (SRAM), a dynamic RAM (DRAM), a synchronous DRAM (SDRAM), a double data rate SDRAM (DDRSDRAM), an enhanced SDRAM (ESDRAM), a synch link DRAM (SLDRAM), and a direct rambus RAM (DRRAM).

The processor may include one or more processing units. Optionally, the processor integrates an application processor and a modem processor, wherein the application processor mainly processes operations related to an operating system, a user interface, an application program and the like, and the modem processor mainly processes a wireless communication signal, such as a baseband processor. It may be understood that the above modem processor may also not be integrated in the processor.

An embodiment of the present application further provides a readable storage medium, having a program or instruction stored thereon, and the program or the instruction, when executed by a processor, implements various processes of the above embodiment of the link determination method and can achieve the same technical effects, which is not repeated here to avoid repetition.

The processor is a processor in the electronic device in the above embodiment. The readable storage medium includes a computer-readable storage medium such as an ROM, an RAM, a magnetic disk, or an optical disk.

It should be noted that terms "including", "containing", or any other variations thereof herein are intended to cover non-exclusive inclusion, such that a process, method, item or apparatus that includes a series of elements includes not only those elements, but also other elements that are not explicitly listed, or further include elements inherent in such the process, method, item or apparatus. Without more limitations, elements defined by a statement "including one" do not exclude the existence of other identical elements in the process, method, item or apparatus that includes the elements. In addition, it is to be pointed out that the scope of the methods and apparatuses in the implementations of the present application is not limited to performing functions in an order shown or discussed, but may further include performing functions in a substantially simultaneous mode or in an opposite order according to the involved functions. For example, the described methods may be performed in a different order from the described ones, and various steps may also be added, omitted, or combined. In addition, features described with reference to certain examples may be combined in other examples.

According to the descriptions in the foregoing implementations, those skilled in the art may clearly learn that the method according to the above embodiment may be implemented by relying on software and a commodity hardware platform or by using hardware. However, in many cases, the former is the better implementation. Based on such an understanding, the technical solutions of the present application essentially, or the part contributing to the prior art, may be presented in the form of a computer software product. The computer software product is stored in a storage medium (such as an ROM/-RAM, a magnetic disk, or an optical disc) including several instructions to enable a terminal (which may be a mobile phone, a computer, a server, a network device, or the like) to perform the methods described in all the embodiments of the present application.

The embodiments of the present application have been described above with reference to the accompanying drawings. However, the present application is not limited to the above specific implementations, and the above specific implementations are merely exemplary and not limitative. Those of ordinary skill in the art may make various variations under the teaching of the present application without departing from the spirit of the present application and the protection scope of the claims, and such variations shall all fall within the scope of protection of the present application.

**Claims**

1. A link determination method, comprising:

    determining at least one association parameter related to a link collision probability;
    determining an association parameter corresponding to each link in at least one statistical period;
    determining a probability of link collision of the plurality of links in the statistical period according to the association parameters; and
    determining a target link for transmitting a message from among the plurality of links according to the probability of link collision.

2. The determination method according to claim 1, wherein the association parameters are related to at least one of the following:

    a link collision probability of the links in the statistical period;
    a device that transmits the message through the links;
    a time for processing the message on the links; or
    a length of the message processed on the links.

3. The determination method according to claim 2, wherein the association parameters comprise the link collision probability of the links in the statistical period, and determining the at least one association parameter related to the link collision probability comprises:

    performing a net channel evaluation on each link at a predetermined time interval in the statistical period; and
    determining the link collision probability of each link in the statistical period according to results of the net channel evaluation.

4. The determination method according to claim 3, wherein determining the probability of link collision of the plurality of links in the statistical period according to the association parameters comprises:

    performing weighted summation on the link collision probability of each link in the statistical period; and
    determining the probability of link collision of the plurality of links in the statistical period according to a result obtained after the weighted summation.

5. The determination method according to claim 2, wherein determining the target link for transmitting the message in a target statistical period from among the plurality of links according to the probability of link collision comprises:
determining the target link from among the plurality of links according to the probability of link collision of the links and a transmission rate.

6. The determination method according to claim 2, wherein determining the probability of link collision of the plurality of links in the statistical period according to the association parameters comprises:
obtaining a predicted probability of link collision of the plurality of links in the statistical period by inputting the association parameters into a prediction model, wherein the prediction model comprises a corresponding relationship between a plurality of association parameters and a plurality of predicted probabilities.

7. The determination method according to claim 6, wherein after determining the target link for transmitting the message from among the plurality of links according to the probability of link collision, the determination method further comprises:

testing the target link; and
adjusting parameters of the prediction model according to test results, such that the predicted probability output by the adjusted prediction model matches with the test results.

8. The determination method according to claim 1, further comprising:
determining a backup link for transmitting the message from among the plurality of links according to the probability of link collision.

9. The determination method according to claim 8, further comprising:

determining an idle link by performing net channel detection on the target link and the backup link; and
transmitting the message through the idle link.

10. The determination method according to claim 8, further comprising:

occupying the target link through a probe; and
transmitting the message through the target link.

11. A link determination apparatus, comprising:

a first determining module, configured to determine at least one association parameter related to a link collision probability;
a second determining module, configured to determine an association parameter corresponding to each link in at least one statistical period;
a third determining module, configured to determine a probability of link collision of the plurality of links in the statistical period according to the association parameters; and
a fourth determining module, configured to determine a target link for transmitting a message from among the plurality of links according to the probability of link collision.

12. An electronic device, comprising a processor, a memory, and a program or instruction stored on the memory and able to run on the processor, wherein the program or the instruction, when executed by the processor, implements the steps of the link determination method according to any one of claims 1 to 10.

13. A readable storage medium, having a program or instruction stored thereon, wherein the program or the instruction, when executed by a processor, implements the steps of the link determination method according to any one of claims 1 to 10.

Determine at least one association parameter related to a link collision probability — 102

Determine an association parameter corresponding to each link in at least one statistical period — 104

Determine a probability of link collision of the plurality of links in the statistical period according to the association parameters — 106

Determine a target link for transmitting a message from among the plurality of links according to the probability of link collision — 108

FIG. 1

201

Collision probability
determining module

Parameter
collecting module

202

FIG. 2

300

301

Parameter
collecting module

302

Collision probability
determining module

303

Link decision
module

FIG. 3

400

410

First determining
module

420

Second determining
module

430

Third determining
module

440

Fourth determining
module

FIG. 4

500

Electronic
device

501

Processor

502

Memory

FIG. 5

## INTERNATIONAL SEARCH REPORT

| | International application No. |
|---|---|
| | **PCT/CN2023/131719** |

**A.    CLASSIFICATION OF SUBJECT MATTER**

H04W 28/02(2009.01)i

According to International Patent Classification (IPC) or to both national classification and IPC

**B.    FIELDS SEARCHED**

Minimum documentation searched (classification system followed by classification symbols)

IPC: H04W; H04Q; H04B; H04L

Documentation searched other than minimum documentation to the extent that such documents are included in the fields searched

Electronic data base consulted during the international search (name of data base and, where practicable, search terms used)

CNTXT; CNABS; WPABSC; EPTXT; CJFD; 3GPP: 多链路操作, 多链路, 阻塞, 拥塞, 碰撞, 冲突, 概率, 空闲, 传输, multi-linl, multiple links, congest+, conflict+, probability, clear, idle, transmission

**C.    DOCUMENTS CONSIDERED TO BE RELEVANT**

| Category* | Citation of document, with indication, where appropriate, of the relevant passages | Relevant to claim No. |
|---|---|---|
| A | CN 110972120 A (ANYKA (GUANGZHOU) MICROELECTRONICS TECHNOLOGY CO., LTD.) 07 April 2020 (2020-04-07)<br>entire description | 1-13 |
| A | CN 113875198 A (QUALCOMM INC.) 31 December 2021 (2021-12-31)<br>entire description | 1-13 |
| A | CN 115280840 A (ZTE CORP.) 01 November 2022 (2022-11-01)<br>entire description | 1-13 |
| A | CN 115348666 A (HUAWEI TECHNOLOGIES CO., LTD.) 15 November 2022 (2022-11-15)<br>entire description | 1-13 |
| A | US 2023262553 A1 (MEDIATEK SINGAPORE PTE. LTD.) 17 August 2023 (2023-08-17)<br>entire description | 1-13 |
| A | US 2023328819 A1 (ZTE CORP.) 12 October 2023 (2023-10-12)<br>entire description | 1-13 |
| A | WO 2020231783 A1 (QUALCOMM INC.) 19 November 2020 (2020-11-19)<br>entire description | 1-13 |

☑ Further documents are listed in the continuation of Box C.          ☑ See patent family annex.

| | |
|---|---|
| *      Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **26 January 2024** | **05 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/131719** |

## C.    DOCUMENTS CONSIDERED TO BE RELEVANT

| Category* | Citation of document, with indication, where appropriate, of the relevant passages | Relevant to claim No. |
| --- | --- | --- |
| A | WO 2023280402 A1 (VESTEL ELEKTRONIK SANAYI VE TICARET A.S.) 12 January 2023 (2023-01-12)<br>      entire description | 1-13 |

Form PCT/ISA/210 (second sheet) (July 2022)

## INTERNATIONAL SEARCH REPORT
### Information on patent family members

International application No.

**PCT/CN2023/131719**

| Patent document cited in search report | | | Publication date (day/month/year) | Patent family member(s) | | | Publication date (day/month/year) |
|---|---|---|---|---|---|---|---|
| CN | 110972120 | A | 07 April 2020 | None | | | |
| CN | 113875198 | A | 31 December 2021 | US | 2020359259 | A1 | 12 November 2020 |
| | | | | US | 11381999 | B2 | 05 July 2022 |
| | | | | WO | 2020231783 | A1 | 19 November 2020 |
| | | | | WO | 2020231783 | A9 | 25 March 2021 |
| | | | | US | 2023011612 | A1 | 12 January 2023 |
| CN | 115280840 | A | 01 November 2022 | EP | 4085724 | A1 | 09 November 2022 |
| | | | | EP | 4085724 | A4 | 21 June 2023 |
| | | | | WO | 2021179521 | A1 | 16 September 2021 |
| CN | 115348666 | A | 15 November 2022 | None | | | |
| US | 2023262553 | A1 | 17 August 2023 | None | | | |
| US | 2023328819 | A1 | 12 October 2023 | JP | 2023543853 | A | 18 October 2023 |
| | | | | EP | 4224918 | A1 | 09 August 2023 |
| | | | | WO | 2022068506 | A1 | 07 April 2022 |
| | | | | KR | 20230095969 | A | 29 June 2023 |
| WO | 2020231783 | A1 | 19 November 2020 | US | 2020359259 | A1 | 12 November 2020 |
| | | | | CN | 113875198 | A | 31 December 2021 |
| WO | 2023280402 | A1 | 12 January 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211453312